# EUROPEAN PATENT SPECIFICATION

(11) **EP 4 160 897 B1**
(45) Date of publication and mention of the grant of the patent: **02.12.2026**
(21) Application number: 21855807.0
(22) Date of filing: 02.06.2021
(51) Int. Cl.: H02M 3/28, H02M 3/335, H02M 3/00

(54) **BIDIRECTIONAL DC-DC CONVERTER**
BIDIREKTIONALER GLEICHSTROM-GLEICHSTROM-WANDLER
CONVERTISSEUR CC-CC BIDIRECTIONNEL

(30) Priority: 13.08.2020 JP 2020136815
(43) Date of publication of application: 05.04.2023
(73) Proprietor: Hitachi, Ltd., Chiyoda-ku Tokyo 100-8280 (JP)
(72) Inventor: CHOUDHURY, Abhijit, Tokyo 100-8280 (JP); KANOUDA, Akihiko, Tokyo 100-8280 (JP)
(74) Representative: Manitz Finsterwald Patent- und Rechtsanwaltspartnerschaft mbB
(86) International application number: PCT/JP2021/021074
(87) International publication number: WO 2022/034728

(56) References cited:
- WO-A1-2015/004989
- WO-A1-2017/134232
- WO-A1-2018/149295
- CN-A- 110 868 074
- JP-A- 2012 070 491
- JP-A- 2014 079 108
- US-A1- 2015 381 064

## Description

### Technical Field

The present invention relates to a bidirectional DC-DC converter that converts DC power bidirectionally which are input and output between two DC power supplies.

### Background Art

In recent years, with the rapid expansion of the electric vehicle market, bidirectional storage battery chargers have been generalized. A dual active bridge (DAB) type or a resonant type DC-DC converter is mainly used as such a storage battery charger. The resonant type DC-DC converter has higher efficiency than the DAB type, and a transformer current has a sinusoidal shape, so that it is possible to reduce stress on the device and electromagnetic noise. For example, PTL 1 discloses a bidirectional resonant type DC-DC converter including LC resonant circuits on a primary side and a secondary side of a transformer, respectively.

### Citation List

### Patent Literature

PTL 1: US 2019/0372471 A

WO 2018/149295 A1 discloses a DC/DC converter with short-circuitable resonators between a transformer and an inverter or rectifier.

CN 110 868 074 discloses a DC/DC converter with capacitors resonating with a leakage inductance between a transformer and an inverter or rectifier.

### Technical Problem

In the conventional bidirectional DC-DC converter described in PTL 1, the gain of an output voltage changes non-linearly. Accordingly, there is a problem that the range of the output voltage is limited and the control stability is low.

### Summary of Invention

It is the object of the invention to provide a bidirectional DC-DC converter having an improved range of the output voltage and improved control stability.

### Solution to Problem

This object is accomplished by the features of claim 1.

A bidirectional DC-DC converter has the features of claim 1. It is a DC-DC converter capable of converting DC power bidirectionally between a first DC power supply and a second DC power supply. The bidirectional DC-DC converter includes: a transformer; a first bridge circuit for converting DC power and AC power to each other which are input and output between the first DC power supply and a primary side of the transformer; a second bridge circuit for converting DC power and AC power to each other which are input and output between the second DC power supply and a secondary side of the transformer; a first resonant circuit connectable between the first bridge circuit and the primary side of the transformer; a second resonant circuit connectable between the second bridge circuit and the secondary side of the transformer; a first bypass switch for switching a connection state of the first resonant circuit between the first bridge circuit and the primary side of the transformer; a second bypass switch for switching a connection state of the second resonant circuit between the second bridge circuit and the secondary side of the transformer; and a control unit for controlling each of the first bypass switch and the second bypass switch. Claim 1 recited further features.

### Advantageous Effects of Invention

According to the present invention, the range of the output voltage is improved, so that a bidirectional DC-DC converter having high control stability can be provided. Brief Description of Drawings
FIG. 1 is a schematic configuration diagram of a bidirectional DC-DC converter according to a first embodiment being not part of the present invention.
FIG. 2 is a diagram illustrating a configuration example of bridge circuits.
FIG. 3 is a table illustrating switching states of bypass switches controlled by the control unit in the bidirectional DC-DC converter according to the first embodiment being not part of the present invention.
FIG. 4 is a diagram illustrating switching control of the bypass switches by the control unit.
FIG. 5 is a functional configuration diagram of the control unit.
FIG. 6 is a diagram illustrating an arrangement example of each component in the bidirectional DC-DC converter.
FIG. 7 is a schematic configuration diagram of a bidirectional DC-DC converter according to a second embodiment being not part of the present invention.
FIG. 8 is a table illustrating switching states of bypass switches controlled by a control unit in the bidirectional DC-DC converter according to the second embodiment being not part of the present invention.
FIG. 9 is a schematic configuration diagram of a bidirectional DC-DC converter according to a third embodiment being not part of the present invention.
FIG. 10 is a schematic configuration diagram of a bidirectional DC-DC converter according to a fourth embodiment being the embodiment of the present invention.

### Description of Embodiments

Hereinafter, embodiments will be described.

### (First embodiment)

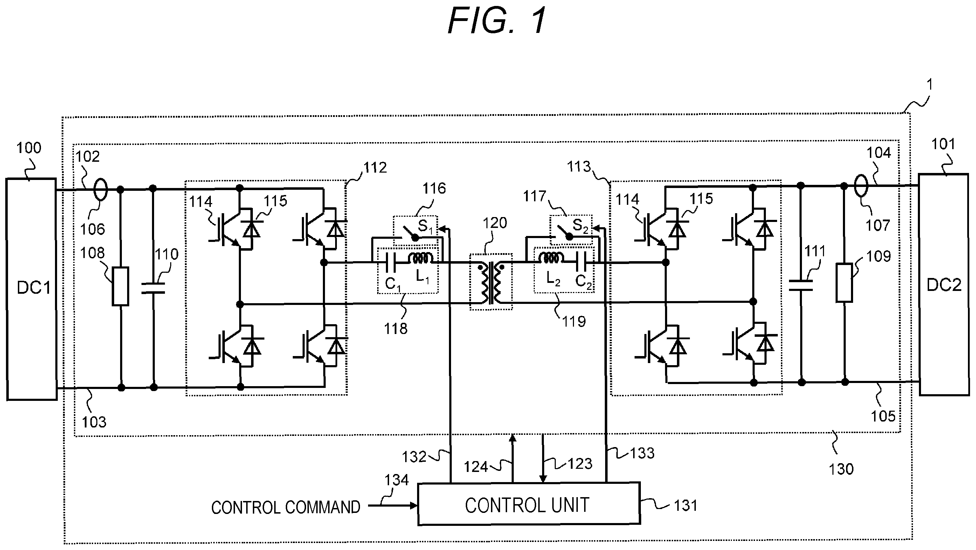

FIG. 1 is a schematic configuration diagram of a bidirectional DC-DC converter according to a first embodiment. A bidirectional DC-DC converter 1 illustrated in FIG. 1 is a DC-DC converter that is connected between a DC power supply 100 and a DC power supply 101 and is capable of converting DC power bidirectionally between the DC power supply 100 and the DC power supply 101. That is, in a case where power flows in a direction from the DC power supply 100 toward the DC power supply 101, the DC power output from the DC power supply 100 is converted in the bidirectional DC-DC converter 1 and is input to the DC power supply 101. In this case, the DC power supply 100 operates as a power source, and the DC power supply 101 operates as a load. Conversely, in a case where power flows in a direction from the DC power supply 101 toward the DC power supply 100, the DC power output from the DC power supply 101 is converted in the bidirectional DC-DC converter 1 and is input to the DC power supply 100. In this case, the DC power supply 101 operates as a power source, and the DC power supply 100 operates as a load.

The bidirectional DC-DC converter 1 includes a converter circuit unit 130 and a control unit 131. The converter circuit unit 130 is connected to the DC power supply 100 via a positive electrode terminal 102 and a negative electrode terminal 103, and is connected to the DC power supply 101 via a positive electrode terminal 104 and a negative electrode terminal 105. The converter circuit unit 130 includes current sensors 106 and 107, voltage sensors 108 and 109, smoothing capacitors 110 and 111, bridge circuits 112 and 113, bypass switches 116 and 117, resonant circuits 118 and 119, and a transformer 120.

The current sensor 106 is connected between the DC power supply 100 and the bridge circuit 112, and detects a current flowing through the DC power supply 100. The current sensor 107 is connected between the DC power supply 101 and the bridge circuit 113, and detects a current flowing through the DC power supply 101. The detection result of each current by these current sensors is output from the converter circuit unit 130 to the control unit 131 as a sensor signal 123.

The voltage sensor 108 detects a voltage of the DC power supply 100. The voltage sensor 109 detects a voltage of the DC power supply 101. The detection result of each voltage by these voltage sensors is output from the converter circuit unit 130 to the control unit 131 as the sensor signal 123.

The smoothing capacitor 110 is connected in parallel with the bridge circuit 112 with respect to the DC power supply 100, and smooths the DC power input and output between the DC power supply 100 and the bridge circuit 112. The smoothing capacitor 111 is connected in parallel with the bridge circuit 113 with respect to the DC power supply 101, and smooths the DC power input and output between the DC power supply 101 and the bridge circuit 113.

The bridge circuit 112 converts DC power and AC power to each other which are input and output between the DC power supply 100 and a primary side of the transformer 120. That is, in a case where power flows in the direction from the DC power supply 100 toward the DC power supply 101, the bridge circuit 112 converts the DC power output from the DC power supply 100 into AC power and outputs the AC power to the primary side of the transformer 120. Conversely, in a case where power flows in the direction from the DC power supply 101 toward the DC power supply 100, the bridge circuit 112 converts the AC power flowing through the primary side of the transformer 120 into DC power and outputs the DC power to the DC power supply 100.

The bridge circuit 113 converts DC power and AC power to each other which are input and output between the DC power supply 101 and a secondary side of the transformer 120. That is, in a case where power flows in the direction from the DC power supply 100 toward the DC power supply 101, the bridge circuit 113 converts the AC power flowing through the secondary side of the transformer 120 into DC power and outputs the DC power to the DC power supply 101. Conversely, in a case where power flows in the direction from the DC power supply 101 toward the DC power supply 100, the bridge circuit 113 converts the DC power output from the DC power supply 101 into AC power and outputs the AC power to the secondary side of the transformer 120.

The bridge circuits 112 and 113 are each constituted of a full bridge circuit including two legs, and each leg is configured by connecting two arms of parallel connection of a switching element 114 and a diode 115 in series. Note that FIG. 1 illustrates an example in which the bridge circuits 112 and 113 are full bridge circuits. However, as described later, the bridge circuits 112 and 113 may be realized by half bridge circuits including one leg.

Each of the switching elements 114 of the bridge circuits 112 and 113 operates in response to a gate control signal 124 input from the control unit 131, and is switched to either an on state or an off state. Each switching element 114 is constituted by using, for example, an insulated gate bipolar transistor (IGBT) or a metal-oxide-semiconductor field-effect transistor (MOSFET). Note that, in a case of the MOSFET, a body diode of each switching element 114 may be used as the diode 115.

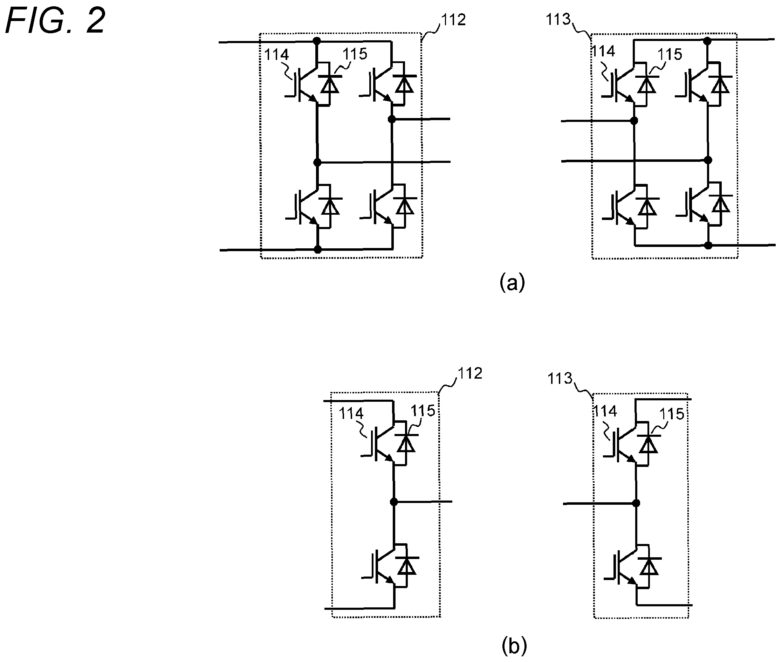

FIG. 2 is a diagram illustrating a configuration example of the bridge circuits 112 and 113. FIG. 2(a) illustrates a configuration example in which the bridge circuits 112 and 113 are full bridge circuits, similarly to the example illustrated in FIG. 1. In the circuit configuration of FIG. 2(a), four switching elements 114 and four diodes 115 are arranged in each of the bridge circuits 112 and 113. On the other hand, FIG. 2(b) illustrates a configuration example in which the bridge circuits 112 and 113 are half bridge circuits. In the circuit configuration of FIG. 2(b), two switching elements 114 and two diodes 115 are arranged in each of the bridge circuits 112 and 113.

Returning to the description of FIG. 1, the high frequency transformer 120 is formed by winding each of a primary winding and a secondary winding around an iron core at a predetermined winding ratio, and performs voltage conversion of AC power according to the winding ratio between the primary side and the secondary side. Note that a multi-winding transformer 120 including a plurality of windings on each of the primary side and the secondary side may be used.

In a case where power flows in the direction from the DC power supply 100 toward the DC power supply 101, each of the switching elements 114 of the bridge circuit 112 operates at a predetermined cycle, whereby the DC power supplied from the DC power supply 100 is converted into AC power, and the AC power after the voltage conversion is transmitted from the primary side to the secondary side of the transformer 120. The AC power is rectified by each of the diodes 115 of the bridge circuit 113, converted into DC power, and the DC power is output to the DC power supply 101. Conversely, in a case where power flows in the direction from the DC power supply 101 toward the DC power supply 100, each of the switching elements 114 of the bridge circuit 113 operates at a predetermined cycle, whereby the DC power supplied from the DC power supply 101 is converted into AC power, and the AC power after the voltage conversion is transmitted from the secondary side to the primary side of the transformer 120. The AC power is rectified by each of the diodes 115 of the bridge circuit 112, converted into DC power, and the DC power is output to the DC power supply 100.

The resonant circuit 118 is provided on the primary side of the transformer 120, and is constituted by using a capacitor C1 and an inductor L1 connected in series. Note that the positions of the capacitor C1 and the inductor L1 may be interchanged. The bypass switch 116 is connected between both ends of the resonant circuit 118. The bypass switch 116 is constituted by using various relays, for example.

The bypass switch 116 and the resonant circuit 118 are each connected between the bridge circuit 112 and the primary side of the transformer 120. The bypass switch 116 and the resonant circuit 118 are connected in parallel to each other, and the connection state of the resonant circuit 118 between the bridge circuit 112 and the primary side of the transformer 120 is switched according to the switching state of the bypass switch 116. That is, in a case where the bypass switch 116 is switched to an open (off) state, the bridge circuit 112 and the primary side of the transformer 120 are connected via the resonant circuit 118, and an LC resonant circuit is formed on the primary side of the transformer 120. On the other hand, in a case where the bypass switch 116 is switched to a conductive (on) state, the bridge circuit 112 and the primary side of the transformer 120 are connected without the resonant circuit 118. The switching state of the bypass switch 116 is controlled in accordance with a switch control signal 132 input from the control unit 131.

The resonant circuit 119 is provided on the secondary side of the transformer 120, and is constituted by using a capacitor C2 and an inductor L2 connected in series. Note that the positions of the capacitor C2 and the inductor L2 may be interchanged. The bypass switch 117 is connected between both ends of the resonant circuit 119. The bypass switch 117 is constituted by using various relays, for example.

The bypass switch 117 and the resonant circuit 119 are each connected between the bridge circuit 113 and the secondary side of the transformer 120. The bypass switch 117 and the resonant circuit 119 are connected in parallel to each other, and the connection state of the resonant circuit 119 between the bridge circuit 113 and the secondary side of the transformer 120 is switched according to the switching state of the bypass switch 117. That is, in a case where the bypass switch 117 is switched to an open (off) state, the bridge circuit 113 and the secondary side of the transformer 120 are connected via the resonant circuit 119, and an LC resonant circuit is formed on the secondary side of the transformer 120. On the other hand, in a case where the bypass switch 117 is switched to a conductive (on) state, the bridge circuit 113 and the secondary side of the transformer 120 are connected without the resonant circuit 119. The switching state of the bypass switch 117 is controlled in accordance with a switch control signal 133 input from the control unit 131.

The control unit 131 performs predetermined arithmetic processing on the basis of the sensor signal 123 from each sensor and a control command 134 input from the outside to generate the gate control signal 124 and the switch control signals 132 and 133. Note that the control command 134 is input via an operation unit (not illustrated) by an operator who operates the system on which the bidirectional DC-DC converter 1 is mounted, for example. The control unit 131 outputs the generated gate control signal 124 to the bridge circuits 112 and 113, and outputs the switch control signals 132 and 133 to the bypass switches 116 and 117, respectively. As a result, the control unit 131 controls the operation of the bridge circuits 112 and 113 and controls the switching states of the bypass switches 116 and 117 to control the direction of the DC power input and output between the DC power supply 100 and the DC power supply 101 via the bidirectional DC-DC converter 1. The control unit 131 is constituted by using, for example, a microcomputer, and realizes desired arithmetic processing by executing a program stored in advance in a memory or the like. Note that the control unit 131 may be constituted by using a logic circuit such as a field programmable gate array (FPGA) or an application specific integrated circuit (ASIC) instead of the microcomputer or in combination with the microcomputer.

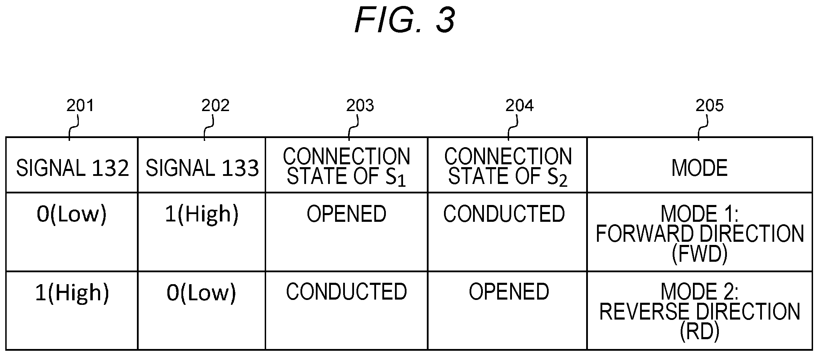

FIG. 3 is a table illustrating switching states of the bypass switches 116 and 117 controlled by the control unit 131 in the bidirectional DC-DC converter according to the first embodiment. In the table in FIG. 3, columns 201 and 202 represent states of the switch control signals 132 and 133, respectively, and columns 203 and 204 represent switching states of the bypass switches 116 and 117, respectively. In addition, a column 205 represents operation mode (a direction in which power flows) of the bidirectional DC-DC converter 1.

In the bidirectional DC-DC converter 1 of the present embodiment, in a case where DC power flowing in the direction (forward direction) from the DC power supply 100 toward the DC power supply 101 is converted, as illustrated in the table in FIG. 3, the control unit 131 outputs the switch control signal 132 at "0", that is, at a low level, and outputs the switch control signal 133 at "1", that is, at a high level. As a result, the bypass switch 116 (S1) is switched to an open state, and the bypass switch 117 (S2) is switched to a conductive state. As a result, the resonant circuit 118 is connected between the bridge circuit 112 and the primary side of the transformer 120, and an LC resonant circuit is formed on the primary side of the transformer 120. The control unit 131 performs an operation of mode 1 by causing each of the switching elements 114 of the bridge circuit 112 to perform a switching operation so that power flows in the forward direction via the LC resonant circuit.

On the other hand, in a case where DC power flowing in the direction (reverse direction) from the DC power supply 101 toward the DC power supply 100 is converted, as illustrated in the table in FIG. 3, the control unit 131 outputs the switch control signal 132 at "1", that is, at a high level, and outputs the switch control signal 133 at "0", that is, at a low level. As a result, the bypass switch 116 (S1) is switched to a conductive state, and the bypass switch 117 (S2) is switched to an open state. As a result, the resonant circuit 119 is connected between the bridge circuit 113 and the secondary side of the transformer 120, and an LC resonant circuit is formed on the secondary side of the transformer 120. The control unit 131 performs an operation of mode 2 by causing each of the switching elements 114 of the bridge circuit 113 to perform a switching operation so that power flows in the reverse direction via the LC resonant circuit.

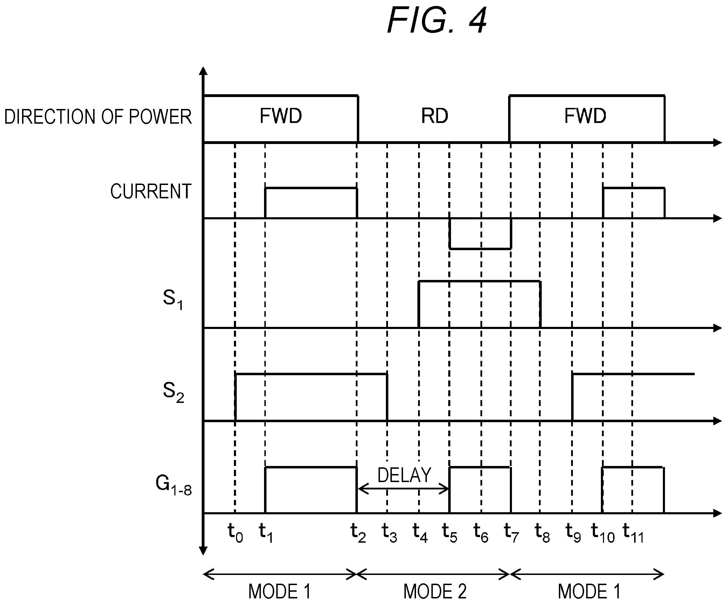

FIG. 4 is a diagram illustrating switching control of the bypass switches 116 and 117 by the control unit 131. As illustrated in FIG. 4, the control unit 131 changes each of the switch control signals 132 and 133 at a predetermined timing to switch the bypass switches 116 (S1) and 117 (S2), and outputs the gate control signal 124 to the bridge circuits 112 and 113 to cause each of the switching elements 114 (G1 to G8) to perform the switching operation. As a result, in the bidirectional DC-DC converter 1, the operation of mode 1 in which power flows in the forward direction and the operation of mode 2 in which power flows in the reverse direction are alternately performed.

Specifically, for example, the control unit 131 outputs the switch control signals 132, 133, and the gate control signal 124 as follows. First, at a point of time at which the bidirectional DC-DC converter 1 is turned on, both the bypass switches 116 (S1) and 117 (S2) are in an open state. Thereafter, at a time point t0, the control unit 131 changes the switch control signal 133 from a low level to a high level to switch the bypass switch 117 to a conductive state. As a result, a state is brought about where the resonant circuit 118 is connected to the primary side of the transformer 120, and the resonant circuit 119 is not connected to the secondary side of the transformer 120.

Next, at a time point t1, the control unit 131 starts outputting the gate control signal 124 to each of the switching elements 114 of the bridge circuit 112. As a result, the bridge circuit 112 starts operation and the bidirectional DC-DC converter 1 operates in mode 1, so that power conversion from the primary side to the secondary side of the transformer 120 is performed. As a result, a current flows in the direction from the DC power supply 100 toward the DC power supply 101.

In a case of switching from mode 1 to mode 2, first, at a time point t2, the control unit 131 stops outputting the gate control signal 124 to each of the switching elements 114 of the bridge circuit 112. Then, when the power output from the bridge circuit 113 to the DC power supply 101 becomes less than a predetermined value, for example, less than 1 [W], at a time point t3, the control unit 131 changes the switch control signal 133 from a high level to a low level to switch the bypass switch 117 to an open state. Thereafter, at a time point t4, the control unit 131 changes the switch control signal 132 from a low level to a high level to switch the bypass switch 116 to a conductive state. As a result, a state is brought about where the resonant circuit 118 is not connected to the primary side of the transformer 120, and the resonant circuit 119 is connected to the secondary side of the transformer 120.

Next, at a time point t5, the control unit 131 starts outputting the gate control signal 124 to each of the switching elements 114 of the bridge circuit 113. As a result, the bridge circuit 113 starts operation and the bidirectional DC-DC converter 1 operates in mode 2, so that power conversion from the secondary side to the primary side of the transformer 120 is performed. As a result, a current flows in the direction from the DC power supply 101 toward the DC power supply 100. At this time, a delay corresponding to a period from the time point t2 to the time point t5 occurs in the output of the gate control signal 124 at the time of switching from mode 1 to mode 2.

Also in a case of switching from mode 2 to mode 1, control similar to that at the time of switching from mode 1 to mode 2 described above is performed. That is, first, at a time point t7, the control unit 131 stops outputting the gate control signal 124 to each of the switching elements 114 of the bridge circuit 113. Then, when the power output from the bridge circuit 112 to the DC power supply 100 becomes less than a predetermined value, at a time point t8, the control unit 131 changes the switch control signal 132 from a high level to a low level to switch the bypass switch 116 to an open state. Thereafter, at a time point t9, the control unit 131 changes the switch control signal 133 from a low level to a high level to switch the bypass switch 117 to a conductive state. As a result, similarly to the time point t0 described above, a state is brought about where the resonant circuit 118 is connected to the primary side of the transformer 120, and the resonant circuit 119 is not connected to the secondary side of the transformer 120. After switching the bypass switches 116 and 117 in this manner, at a time point t10, the control unit 131 starts outputting the gate control signal 124 to each of the switching elements 114 of the bridge circuit 112. As a result, the bridge circuit 112 starts operation and the bidirectional DC-DC converter 1 operates in mode 1, so that power conversion from the primary side to the secondary side of the transformer 120 is performed. As a result, a current flows in the direction from the DC power supply 100 toward the DC power supply 101.

As described above, the control unit 131 controls outputs of the switch control signals 132, 133, and the gate control signal 124. As a result, it is possible to suppress a rapid change in current and voltage in the bidirectional DC-DC converter 1 at the time of switching modes, and to protect each component in the bidirectional DC-DC converter 1.

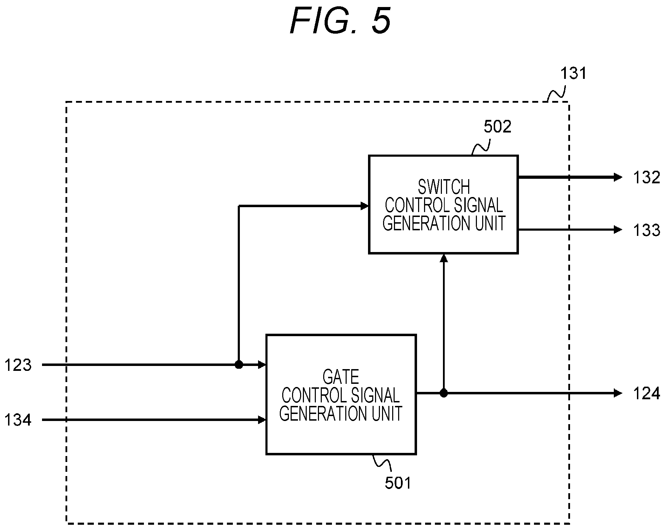

FIG. 5 is a functional configuration diagram of the control unit 131. The control unit 131 includes functional blocks of a gate control signal generation unit 501 and a switch control signal generation unit 502 as its functions. The control unit 131 realizes these functional blocks by executing a predetermined program, for example.

The gate control signal generation unit 501 generates the gate control signal 124 on the basis of voltages and currents of the DC power supplies 100 and 101 indicated by the sensor signal 123 from each sensor and the control command 134 input from the outside. At this time, the gate control signal generation unit 501 selects either mode 1 or mode 2 described above with reference to FIGS. 3 and 4 on the basis of the sensor signal 123 and the control command 134. Then, according to the control mode selected, the gate control signal generation unit 501 determines a direction in which power flows between the DC power supply 100 and the DC power supply 101, and generates the gate control signal 124 according to the direction.

The switch control signal generation unit 502 generates the switch control signals 132 and 133 on the basis of voltages and currents of the DC power supplies 100 and 101 indicated by the sensor signal 123 from each sensor and the gate control signal 124 generated by the gate control signal generation unit 501. Then, the switch control signal generation unit 502 controls the operation of the bypass switches 116 and 117 by outputting the generated switch control signals 132 and 133 to the bypass switches 116 and 117, respectively.

By the processing of each functional block described above, the control unit 131 determines the direction in which power flows between the DC power supply 100 and the DC power supply 101 on the basis of the currents of the DC power supplies 100 and 101 respectively detected by the current sensors 106 and 107, the voltages of the DC power supplies 100 and 101 respectively detected by the voltage sensors 108 and 109, and the control command 134 input from the outside, and generates the gate control signal 124 and the switch control signals 132 and 133.

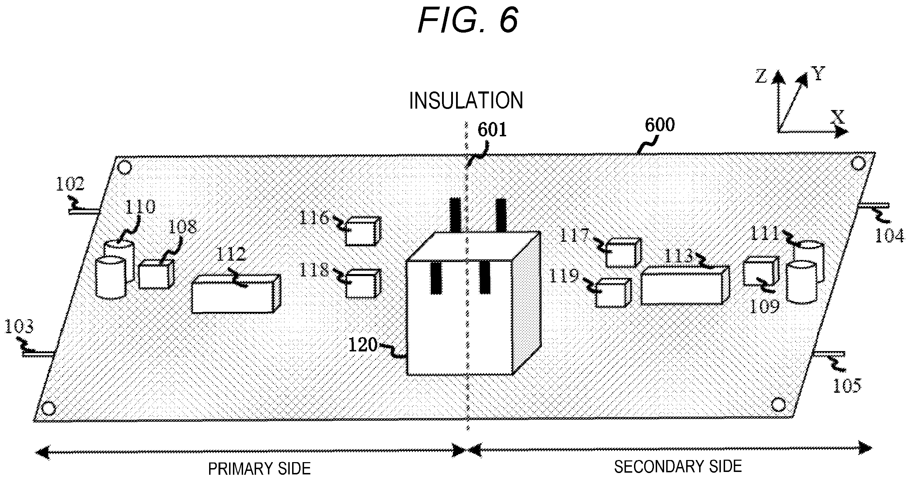

FIG. 6 is a diagram illustrating an arrangement example of each component in the bidirectional DC-DC converter 1. In the arrangement example of FIG. 6, a circuit board 600 includes thereon each component of the converter circuit unit 130, that is, the voltage sensors 108 and 109, the smoothing capacitors 110 and 111, the bridge circuits 112 and 113, the bypass switches 116 and 117, the resonant circuits 118 and 119, and the transformer 120. Note that illustration of the current sensors 106 and 107 is omitted in FIG. 6.

The circuit board 600 is electrically separated into a primary side (input side) and a secondary side (output side) by an insulation boundary line 601 formed by the transformer 120.

Note that, in the circuit board 600 illustrated in FIG. 6, the bypass switches 116 and 117 and the resonant circuits 118 and 119 are all arranged on a single substrate, but can be mounted on separate substrates. For example, another substrate arranged parallel to the circuit board 600 at a predetermined interval from the circuit board 600 may be provided, and the bypass switches 116 and 117 may be mounted on the another substrate. In this manner, a mounting space for each component in the bidirectional DC-DC converter 1 can be reduced, and downsizing can be achieved.

According to the first embodiment described above, the following operational effects are obtained.
(1) The bidirectional DC-DC converter 1 is a DC-DC converter capable of converting DC power bidirectionally between the DC power supply 100 and the DC power supply 101. The bidirectional DC-DC converter 1 includes the transformer 120, the bridge circuit 112 for converting DC power and AC power to each other which are input and output between the DC power supply 100 and the primary side of the transformer 120, the bridge circuit 113 for converting DC power and AC power to each other which are input and output between the DC power supply 101 and the secondary side of the transformer 120, the resonant circuit 118 connectable between the bridge circuit 112 and the primary side of the transformer 120, the resonant circuit 119 connectable between the bridge circuit 113 and the secondary side of the transformer 120, the bypass switch 116 for switching the connection state of the resonant circuit 118 between the bridge circuit 112 and the primary side of the transformer 120, the bypass switch 117 for switching the connection state of the resonant circuit 119 between the bridge circuit 113 and the secondary side of the transformer 120, and the control unit 131 for controlling each of the bypass switch 116 and the bypass switch 117. With such a configuration, an LC resonant circuit is formed on the primary side or the secondary side of the transformer 120 according to the direction of the DC power input and output between the DC power supply 100 and the DC power supply 101 via the bidirectional DC-DC converter 1, and the bidirectional DC-DC converter 1 capable of performing power conversion can be realized by using the LC resonant circuit. Therefore, the range of the output voltage is improved, so that a bidirectional DC-DC converter having high control stability can be provided.
(2) The resonant circuit 118 and the resonant circuit 119 are constituted by using the capacitors C1, C2 and the inductors L1, L2 connected in series, respectively. With such a configuration, an LC resonant circuit can be easily formed on the primary side or the secondary side of the transformer 120 by connecting the resonant circuit 118 or 119.
(3) The resonant circuit 118 is connected in parallel with the bypass switch 116 between the bridge circuit 112 and the primary side of the transformer 120. When the bypass switch 116 is opened by the control unit 131, the bridge circuit 112 and the primary side of the transformer 120 are connected via the resonant circuit 118, and when the bypass switch 116 is conducted by the control unit 131, the bridge circuit 112 and the primary side of the transformer 120 are connected without the resonant circuit 118. In addition, the resonant circuit 119 is connected in parallel with the bypass switch 117 between the bridge circuit 113 and the secondary side of the transformer 120. When the bypass switch 117 is opened by the control unit 131, the bridge circuit 113 and the secondary side of the transformer 120 are connected via the resonant circuit 119, and when the bypass switch 117 is conducted by the control unit 131, the bridge circuit 113 and the secondary side of the transformer 120 are connected without the resonant circuit 119. With such a configuration, the connection states of the resonant circuits 118 and 119 respectively between the bridge circuits 112, 113 and the transformer 120 can be reliably switched by using the bypass switches 116 and 117.
(4) In a case where the control unit 131 converts DC power flowing in the direction from the DC power supply 100 toward the DC power supply 101 (in a case of mode 1), the control unit 131 controls the bypass switch 116 and the bypass switch 117 so that the bypass switch 116 is opened and the bypass switch 117 is conducted. In addition, in a case where the control unit 131 converts DC power flowing in the direction from the DC power supply 101 toward the DC power supply 100 (in a case of mode 2), the control unit 131 controls the bypass switch 116 and the bypass switch 117 so that the bypass switch 116 is conducted and the bypass switch 117 is opened. With such a configuration, the switching control of the bypass switches 116 and 117 can be performed such that the connection states of the resonant circuits 118 and 119 respectively between the bridge circuits 112, 113 and the transformer 120 become appropriate according to the direction of the DC power input and output between the DC power supply 100 and the DC power supply 101 via the bidirectional DC-DC converter 1.
(5) The bidirectional DC-DC converter 1 includes the voltage sensor 108 that detects the voltage of the DC power supply 100, the current sensor 106 that detects the current flowing through the DC power supply 100, the voltage sensor 109 that detects the voltage of the DC power supply 101, and the current sensor 107 that detects the current flowing through the DC power supply 101. The control unit 131 controls the direction of the DC power between the DC power supply 100 and the DC power supply 101 on the basis of the voltages respectively detected by the voltage sensors 108 and 109, the currents respectively detected by the current sensors 106 and 107, and the control command 134 input from the outside. With such a configuration, the control unit 131 can appropriately control the direction of the DC power.
(6) The bypass switches 116 and 117 can each be constituted by using relays. In this manner, the bypass switches 116 and 117 having high environmental resistance and reliability can be realized at a low cost.
(7) The bridge circuits 112 and 113 are each constituted by using a half bridge circuit or a full bridge circuit. With such a configuration, the bridge circuits 112 and 113 can be realized by an arbitrary circuit configuration.
(8) After stopping the operation of the bridge circuit 112, the bidirectional DC-DC converter 1 starts the operation of the bridge circuit 113 when power output from the bridge circuit 112 becomes less than a predetermined value. In addition, after stopping the operation of the bridge circuit 113, the bidirectional DC-DC converter 1 starts the operation of the bridge circuit 112 when power output from the bridge circuit 113 becomes less than a predetermined value. With such a configuration, it is possible to suppress a rapid change in current and voltage in the bidirectional DC-DC converter 1, and to protect each component in the bidirectional DC-DC converter 1.

### (Second embodiment)

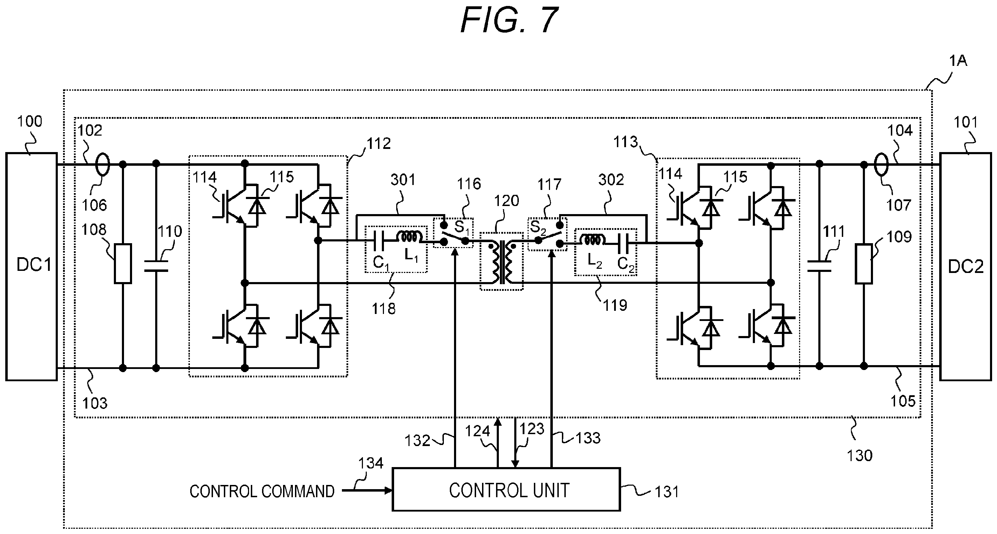

FIG. 7 is a schematic configuration diagram of a bidirectional DC-DC converter according to a second embodiment. Similarly to the bidirectional DC-DC converter 1 described in the first embodiment, a bidirectional DC-DC converter 1A illustrated in FIG. 7 is a DC-DC converter that is connected between the DC power supply 100 and the DC power supply 101 and is capable of converting DC power bidirectionally between the DC power supply 100 and the DC power supply 101.

The bidirectional DC-DC converter 1A of the present embodiment differs from the bidirectional DC-DC converter 1 of the first embodiment in that, in the converter circuit unit 130, bypass paths 301 and 302 are provided in parallel with the resonant circuits 118 and 119, respectively, and the bypass switches 116 and 117 are configured to be switchable between the resonant circuits 118, 119 and the bypass paths 301, 302, respectively. The bidirectional DC-DC converter 1 and the bidirectional DC-DC converter 1A are common in other respects.

In the bidirectional DC-DC converter 1A, the resonant circuit 118 and the bypass path 301 are each connected between the bridge circuit 112 and the primary side of the transformer 120 via the bypass switch 116. The bypass switch 116 switches the connection destination of the primary side of the transformer 120 to either the resonant circuit 118 or the bypass path 301 according to the switch control signal 132 output from the control unit 131. Similarly, the resonant circuit 119 and the bypass path 302 are each connected between the bridge circuit 113 and the secondary side of the transformer 120 via the bypass switch 117. The bypass switch 117 switches the connection destination of the secondary side of the transformer 120 to either the resonant circuit 119 or the bypass path 302. As a result, similarly to the first embodiment, an LC resonant circuit is formed on the primary side or the secondary side of the transformer 120 according to the direction of the DC power input and output between the DC power supply 100 and the DC power supply 101 via the bidirectional DC-DC converter 1A, and the bidirectional DC-DC converter 1A capable of performing power conversion is realized by using the LC resonant circuit.

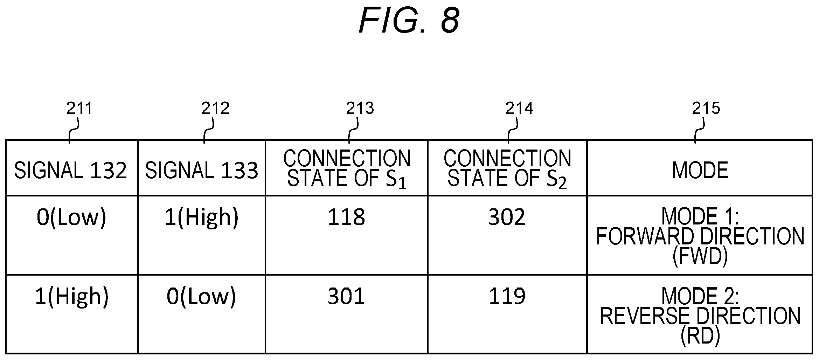

FIG. 8 is a table illustrating switching states of the bypass switches 116 and 117 controlled by the control unit 131 in the bidirectional DC-DC converter according to the second embodiment. In the table in FIG. 8, columns 211 and 212 represent states of the switch control signals 132 and 133, respectively, and columns 213 and 214 represent switching states of the bypass switches 116 and 117, respectively. In addition, a column 215 represents operation mode (the direction in which power flows) of the bidirectional DC-DC converter 1A.

In the bidirectional DC-DC converter 1A of the present embodiment, in a case where DC power flowing in the direction (forward direction) from the DC power supply 100 toward the DC power supply 101 is converted, as illustrated in the table in FIG. 8, the control unit 131 outputs the switch control signal 132 at "0", that is, at a low level, and outputs the switch control signal 133 at "1", that is, at a high level. As a result, the bypass switch 116 (S1) is switched to a state of being connected to a resonant circuit 118 side, and the bypass switch 117 (S2) is switched to a state of being connected to a bypass path 302 side. As a result, the resonant circuit 118 is connected between the bridge circuit 112 and the primary side of the transformer 120, and an LC resonant circuit is formed on the primary side of the transformer 120. The control unit 131 performs an operation of mode 1 by causing each of the switching elements 114 of the bridge circuit 112 to perform a switching operation so that power flows in the forward direction via the LC resonant circuit.

On the other hand, in a case where DC power flowing in the direction (reverse direction) from the DC power supply 101 toward the DC power supply 100 is converted, as illustrated in the table in FIG. 8, the control unit 131 outputs the switch control signal 132 at "1", that is, at a high level, and outputs the switch control signal 133 at **"0",** that is, at a low level. As a result, the bypass switch 116 (S1) is switched to a state of being connected to a bypass path 301 side, and the bypass switch 117 (S2) is switched to a state of being connected to a resonant circuit 119 side. As a result, the resonant circuit 119 is connected between the bridge circuit 113 and the secondary side of the transformer 120, and an LC resonant circuit is formed on the secondary side of the transformer 120. The control unit 131 performs an operation of mode 2 by causing each of the switching elements 114 of the bridge circuit 113 to perform a switching operation so that power flows in the reverse direction via the LC resonant circuit.

Note that, in the present embodiment, the control unit 131 controls the outputs of the switch control signals 132, 133, and the gate control signal 124 in accordance with a procedure similar to that in FIG. 4 described in the first embodiment. As a result, the operation of mode 1 in which power flows in the forward direction and the operation of mode 2 in which power flows in the reverse direction can be alternately performed.

According to the second embodiment described above, the bidirectional DC-DC converter 1A includes the bypass path 301 provided in parallel with the resonant circuit 118. The resonant circuit 118 and the bypass path 301 are each connected between the bridge circuit 112 and the primary side of the transformer 120 via the bypass switch 116, and the bypass switch 116 switches the connection destination of the primary side of the transformer 120 to either the resonant circuit 118 or the bypass path 301. In addition, the bidirectional DC-DC converter 1A includes the bypass path 302 provided in parallel with the resonant circuit 119. The resonant circuit 119 and the bypass path 302 are each connected between the bridge circuit 113 and the secondary side of the transformer 120 via the bypass switch 117, and the bypass switch 117 switches the connection destination of the secondary side of the transformer 120 to either the resonant circuit 119 or the bypass path 302. With such a configuration, similarly to the first embodiment, the connection states of the resonant circuits 118 and 119 respectively between the bridge circuits 112, 113 and the transformer 120 can be reliably switched by using the bypass switches 116 and 117.

Furthermore, in a case where the control unit 131 converts DC power flowing in the direction from the DC power supply 100 toward the DC power supply 101 (in a case of mode 1), the control unit 131 controls the bypass switch 116 and the bypass switch 117 so that the connection destination of the primary side of the transformer 120 is switched to the resonant circuit 118 and the connection destination of the secondary side of the transformer 120 is switched to the bypass path 302. In addition, in a case where the control unit 131 converts DC power flowing in the direction from the DC power supply 101 toward the DC power supply 100 (in a case of mode 2), the control unit 131 controls the bypass switch 116 and the bypass switch 117 so that the connection destination of the primary side of the transformer 120 is switched to the bypass path 301 and the connection destination of the secondary side of the transformer 120 is switched to the resonant circuit 119. With such a configuration, similarly to the first embodiment, the switching control of the bypass switches 116 and 117 can be performed such that the connection states of the resonant circuits 118 and 119 respectively between the bridge circuits 112, 113 and the transformer 120 become appropriate according to the direction of the DC power input and output between the DC power supply 100 and the DC power supply 101 via the bidirectional DC-DC converter 1A.

### (Third embodiment)

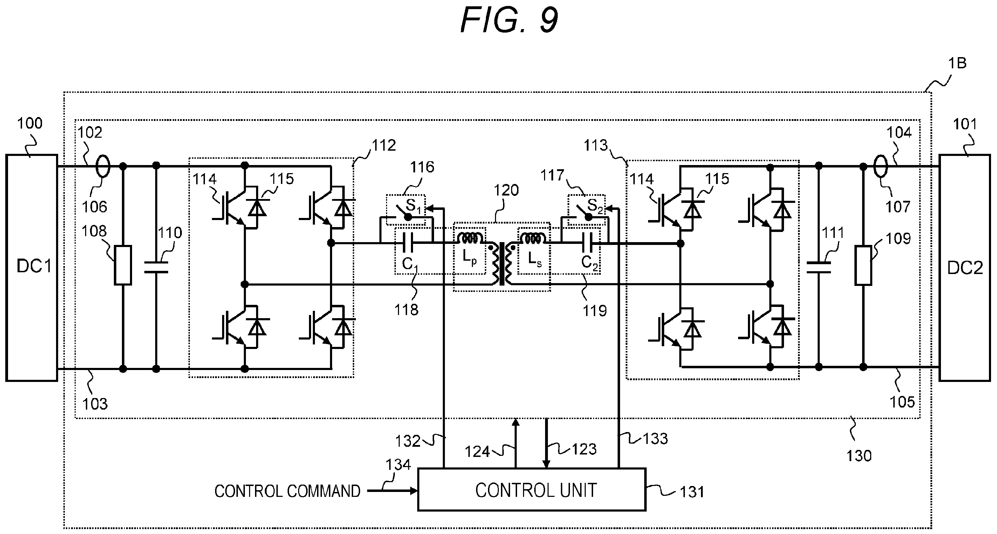

FIG. 9 is a schematic configuration diagram of a bidirectional DC-DC converter according to a third embodiment. Similarly to the bidirectional DC-DC converter 1 described in the first embodiment, a bidirectional DC-DC converter 1B illustrated in FIG. 9 is a DC-DC converter that is connected between the DC power supply 100 and the DC power supply 101 and is capable of converting DC power bidirectionally between the DC power supply 100 and the DC power supply 101.

The bidirectional DC-DC converter 1B of the present embodiment differs from the bidirectional DC-DC converter 1 of the first embodiment in that, in the converter circuit unit 130, the resonant circuits 118 and 119 do not include the inductors L1 and L2, respectively, and the resonant circuits 118 and 119 are constituted by using a leakage flux Lp existing on the primary side and a leakage flux Ls existing on the secondary side of the transformer 120, respectively, instead. The bidirectional DC-DC converter 1 and the bidirectional DC-DC converter 1B are common in other respects.

In the bidirectional DC-DC converter 1B, the capacitor C1 constituting the resonant circuit 118 is connected in parallel with the bypass switch 116 between the bridge circuit 112 and the primary side of the transformer 120. When the bypass switch 116 is opened by the control unit 131, the bridge circuit 112 and the primary side of the transformer 120 are connected via the capacitor C1, and an LC resonant circuit is formed on the primary side of the transformer 120 by the capacitor C1 and the leakage flux Lp of the transformer 120. On the other hand, when the bypass switch 116 is conducted by the control unit 131, the bridge circuit 112 and the primary side of the transformer 120 are connected without the capacitor C1. Accordingly, the LC resonant circuit is not formed on the primary side of the transformer 120.

In addition, the capacitor C2 constituting the resonant circuit 119 is connected in parallel with the bypass switch 117 between the bridge circuit 113 and the secondary side of the transformer 120. When the bypass switch 117 is opened by the control unit 131, the bridge circuit 113 and the secondary side of the transformer 120 are connected via the capacitor C2, and an LC resonant circuit is formed on the secondary side of the transformer 120 by the capacitor C2 and the leakage flux Ls of the transformer 120. On the other hand, when the bypass switch 117 is conducted by the control unit 131, the bridge circuit 113 and the secondary side of the transformer 120 are connected without the capacitor C2. Accordingly, the LC resonant circuit is not formed on the secondary side of the transformer 120.

Note that, in the present embodiment, the control unit 131 controls the outputs of the switch control signals 132, 133, and the gate control signal 124 in accordance with a procedure similar to that in FIG. 4 described in the first embodiment. As a result, the operation of mode 1 in which power flows in the forward direction and the operation of mode 2 in which power flows in the reverse direction can be alternately performed.

According to the third embodiment described above, in the bidirectional DC-DC converter 1B, the resonant circuit 118 is constituted by using the leakage flux Lp on the primary side of the transformer 120 and the capacitor C1, and the resonant circuit 119 is constituted by using the leakage flux Ls on the secondary side of the transformer 120 and the capacitor C2. With such a configuration, the resonant circuits 118 and 119 can be constituted without using the inductors L1 and L2.

### (Fourth embodiment)

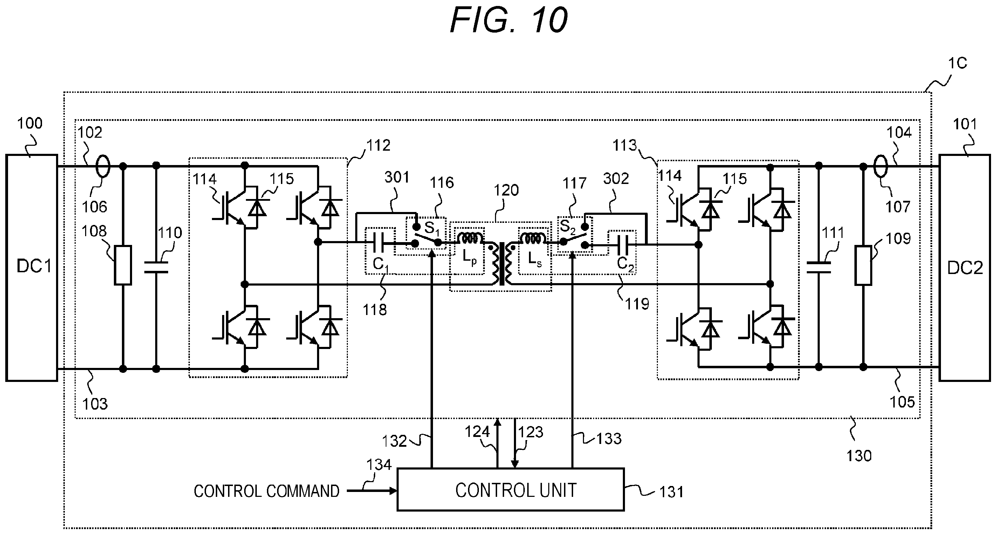

FIG. 10 is a schematic configuration diagram of a bidirectional DC-DC converter according to a fourth embodiment being the embodiment of the present invention. Similarly to the bidirectional DC-DC converter 1 described in the first embodiment, a bidirectional DC-DC converter 1C illustrated in FIG. 10 is a DC-DC converter that is connected between the DC power supply 100 and the DC power supply 101 and is capable of converting DC power bidirectionally between the DC power supply 100 and the DC power supply 101.

In the bidirectional DC-DC converter 1C of the present embodiment, the features of the bidirectional DC-DC converters 1A and 1B respectively described in the second and third embodiments are combined. That is, in the converter circuit unit 130, the bypass paths 301 and 302 are provided in parallel with the capacitors C1 and C2 of the resonant circuits 118 and 119, respectively, and the bypass switches 116 and 117 are configured to be switchable between the capacitors C1, C2 and the bypass paths 301, 302, respectively. In addition, the resonant circuits 118 and 119 do not include the inductors L1 and L2, respectively, and the resonant circuits 118 and 119 are constituted by using the leakage flux Lp existing on the primary side and the leakage flux Ls existing on the secondary side of the transformer 120, respectively, instead.

Note that, in the present embodiment, the control unit 131 controls the outputs of the switch control signals 132, 133, and the gate control signal 124 in accordance with a procedure similar to that in FIG. 4 described in the first embodiment. As a result, the operation of mode 1 in which power flows in the forward direction and the operation of mode 2 in which power flows in the reverse direction can be alternately performed.

According to the fourth embodiment described above, advantageous effects similar to those described in each of the first to third embodiments can be obtained.

Note that, in each of the first to fourth embodiments described above, one or both of the current sensors 106 and 107 may be provided between the bridge circuit 112, 113 and the transformer 120 instead of between the DC power supply 100, 101 and the bridge circuit 112, 113. Alternatively, the current sensor 106, 107 may be provided both between the DC power supply 100, 101 and the bridge circuit 112, 113 and between the bridge circuit 112, 113 and the transformer 120. In this manner, the current sensors 106 and 107 can detect a current flowing between the bridge circuit 112 and the primary side of the transformer 120 and a current flowing between the bridge circuit 113 and the secondary side of the transformer 120, respectively. Further, the control unit 131 generates the gate control signal 124 and the switch control signals 132 and 133 on the basis of the detection results of the currents, so that the direction of the DC power can be appropriately controlled.

Reference Signs List
**1,** 1A, 1B, 1C bidirectional DC-DC converter
100, 101 DC power supply
102, 104 positive electrode terminal
103, 105 negative electrode terminal
106, 107 current sensor
108, 109 voltage sensor
110, 111 smoothing capacitor
112, 113 bridge circuit
114 switching element
115 diode
116, 117 bypass switch
118, 119 resonant circuit
120 transformer
123 sensor signal
124 gate control signal
130 converter circuit unit
131 control unit
132, 133 switch control signal
134 control command
301, 302 bypass path

## Claims

1. A bidirectional DC-DC converter (1C) that is a DC-DC converter capable of converting DC power bidirectionally between a first DC power supply (100) and a second DC power supply (101), the bidirectional DC-DC converter (1C) comprising:
a transformer (120);
a first bridge circuit (112) for converting DC power and AC power to each other which are input and output between the first DC power supply (100) and a primary side of the transformer (120);
a second bridge circuit (113) for converting DC power and AC power to each other which are input and output between the second DC power supply (101) and a secondary side of the transformer (120);
a first resonant circuit (118) connectable between the first bridge circuit (112) and the primary side of the transformer (120);
a second resonant circuit (119) connectable between the second bridge circuit (113) and the secondary side of the transformer (120);
a first bypass switch (116) for switching a connection state of the first resonant circuit (118) between the first bridge circuit (112) and the primary side of the transformer (120) ;
a second bypass switch (117) for switching a connection state of the second resonant circuit (119) between the second bridge circuit (113) and the secondary side of the transformer (120); and
a control unit (131) for controlling each of the first bypass switch (116) and the second bypass switch (117),
**characterized in that**
the first resonant circuit (118) is configured to use a leakage flux on the primary side of the transformer (120) and a first capacitor (C1), and
the second resonant circuit (119) is configured to use a leakage flux on the secondary side of the transformer (120) and a second capacitor (C2),
a first bypass path (301) is provided in parallel with the first capacitor (C1), wherein
the first capacitor (C1) and the first bypass path (301) are each connected between the first bridge circuit (112) and the primary side of the transformer (120) via the first bypass switch (116), and
the first bypass switch (116) is configured to switch a connection destination of the primary side of the transformer (120) to either the first capacitor (C1) or the first bypass path (301),
a second bypass path (302) is provided in parallel with the second capacitor (C2), wherein
the second capacitor (C2) and the second bypass path (302) are each connected between the second bridge circuit (113) and the secondary side of the transformer (120) via the second bypass switch (117), and
the second bypass switch (117) is configured to switch a connection destination of the secondary side of the transformer (120) to either the second capacitor (C2) or the second bypass path (302),
the control unit (131) is configured to control,
in a case where the control unit (131) converts DC power flowing in a direction from the first DC power supply (100) toward the second DC power supply (101), the first bypass switch (116) and the second bypass switch (117) so that the connection destination of the primary side of the transformer (120) is switched to the first capacitor (C1) and the connection destination one of the secondary side of the transformer (120) is switched to the second bypass path (302), and
in a case where the control unit (131) converts DC power flowing in a direction from the second DC power supply (101) toward the first DC power supply (100), the first bypass switch (116) and the second bypass switch (117) so that the connection destination of the primary side of the transformer (120) is switched to the first bypass path (301) and the connection destination of the secondary side of the transformer (120) is switched to the second capacitor (C2).

2. The bidirectional DC-DC converter (1B, 1C) according to claim 1, comprising:
a first voltage sensor configured to detect a voltage of the first DC power supply (100);
a first current sensor configured to detect a current flowing through the first DC power supply (100) and/or a current flowing between the first bridge circuit (112) and the primary side of the transformer (120);
a second voltage sensor configured to detect a voltage of the second DC power supply (101); and
a second current sensor configured to detect a current flowing through the second DC power supply (101) and/or a current flowing between the second bridge circuit (113) and the secondary side of the transformer (120), wherein
the control unit (131) is configured to control a direction of the DC power on a basis of voltages respectively detected by the first voltage sensor and the second voltage sensor, currents respectively detected by the first current sensor and the second current sensor, and a control command input from an outside.

3. The bidirectional DC-DC converter (1B, 1C) according to claim 1, wherein
the first bypass switch (116) and the second bypass switch (117) are each constituted by using a relay.

4. The bidirectional DC-DC converter (1B, 1C) according to claim 1, wherein
the first bridge circuit (112) and the second bridge circuit (113) are each constituted by using a half bridge circuit or a full bridge circuit.

5. The bidirectional DC-DC converter (1B, 1C) according to claim 1, wherein
the first resonant circuit (118) and the second resonant circuit (119) are mounted on a first circuit board (600),
the first bypass switch (116) and the second bypass switch (117) are mounted on a second circuit board, and
the first circuit board (600) and the second circuit board are arranged in parallel to each other at a predetermined interval.

6. The bidirectional DC-DC converter (1B, 1C) according to claim 1, configured to
after stopping an operation of the first bridge circuit (112), start an operation of the second bridge circuit (113) when power output from the first bridge circuit (112) becomes less than a predetermined value, and
after stopping the operation of the second bridge circuit (113), start an operation of the first bridge circuit (112) when power output from the second bridge circuit (113) becomes less than the predetermined value.

## Patentansprüche

1. Bidirektionaler DC-DC-Wandler (1C), der ein DC-DC-Wandler ist, der Gleichstromleistung bidirektional zwischen einer ersten Gleichstrom-Leistungsversorgung (100) und einer zweiten Gleichstrom-Leistungsversorgung (101) umwandeln kann, wobei der bidirektionale DC-DC-Wandler (1C) umfasst:
einen Transformator (120);
eine erste Brückenschaltung (112) zum wechselseitigen Umwandeln von Gleichstromleistung und Wechselstromleistung, die zwischen der ersten Gleichstrom-Leistungsversorgung (100) und einer Primärseite des Transformators (120) eingegeben und ausgegeben werden;
eine zweite Brückenschaltung (113) zum wechselseitigen Umwandeln von Gleichstromleistung und Wechselstromleistung, die zwischen der zweiten Gleichstrom-Leistungsversorgung (101) und einer Sekundärseite des Transformators (120) eingegeben und ausgegeben werden;
eine erste Resonanzschaltung (118), die zwischen der ersten Brückenschaltung (112) und der Primärseite des Transformators (120) verbindbar ist;
eine zweite Resonanzschaltung (119), die zwischen der zweiten Brückenschaltung (113) und der Sekundärseite des Transformators (120) verbindbar ist;
einen ersten Bypassschalter (116) zum Umschalten eines Verbindungszustands der ersten Resonanzschaltung (118) zwischen der ersten Brückenschaltung (112) und der Primärseite des Transformators (120);
einen zweiten Bypassschalter (117) zum Umschalten eines Verbindungszustands der zweiten Resonanzschaltung (119) zwischen der zweiten Brückenschaltung (113) und der Sekundärseite des Transformators (120); und
eine Steuereinheit (131) zum Steuern sowohl des ersten Bypassschalters (116) als auch des zweiten Bypassschalters (117),
**dadurch gekennzeichnet, dass**
die erste Resonanzschaltung (118) eingerichtet ist, einen Streufluss an der Primärseite des Transformators (120) und einen ersten Kondensator (C1) zu verwenden, und
die zweite Resonanzschaltung (119) eingerichtet ist, einen Streufluss an der Sekundärseite des Transformators (120) und einen zweiten Kondensator (C2) zu verwenden,
ein erster Bypasspfad (301) parallel zu dem ersten Kondensator (C1) vorgesehen ist, wobei
der erste Kondensator (C1) und der erste Bypasspfad (301) jeweils zwischen der ersten Brückenschaltung (112) und der Primärseite des Transformators (120) über den ersten Bypassschalter (116) verbunden sind, und
der erste Bypassschalter (116) eingerichtet ist, das Verbindungsziel der Primärseite des Transformators (120) entweder auf den ersten Kondensator (C1) oder den ersten Bypasspfad (301) umzuschalten,
ein zweiter Bypasspfad (302) parallel zu dem zweiten Kondensator (C2) vorgesehen ist, wobei
der zweite Kondensator (C2) und der zweite Bypasspfad (302) jeweils zwischen der zweiten Brückenschaltung (113) und der Sekundärseite des Transformators (120) über den zweiten Bypassschalter (117) verbunden sind, und
der zweite Bypassschalter (117) eingerichtet ist, das Verbindungsziel der Sekundärseite des Transformators (120) entweder auf den zweiten Kondensator (C2) oder den zweiten Bypasspfad (302) umzuschalten,
die Steuereinheit (131) eingerichtet ist,
in einem Fall, in dem die Steuereinheit (131) Gleichstromleistung in einer Richtung von der ersten Gleichstrom-Leistungsversorgung (100) zu der zweiten Gleichstrom-Leistungsversorgung (101) umwandelt, den ersten Bypassschalter (116) und den zweiten Bypassschalter (117) so zu steuern, dass das Verbindungsziel der Primärseite des Transformators (120) auf den ersten Kondensator (C1) und das Verbindungsziel der Sekundärseite des Transformators (120) auf den zweiten Bypasspfad (302) umgeschaltet wird, und
in einem Fall, in dem die Steuereinheit (131) Gleichstromleistung in einer Richtung von der zweiten Gleichstrom-Leistungsversorgung (101) zu der ersten Gleichstrom-Leistungsversorgung (100) umwandelt, den ersten Bypassschalter (116) und den zweiten Bypassschalter (117) so zu steuern, dass das Verbindungsziel der Primärseite des Transformators (120) auf den ersten Bypasspfad (301) und das Verbindungsziel der Sekundärseite des Transformators (120) auf den zweiten Kondensator (C2) umgeschaltet wird.

2. Bidirektionaler DC-DC-Wandler (1B, 1C) nach Anspruch 1, umfassend:
einen ersten Spannungssensor, der eingerichtet ist, eine Spannung der ersten Gleichstrom-Leistungsversorgung (100) zu erfassen;
einen ersten Stromsensor, der eingerichtet ist, einen durch die erste Gleichstrom-Leistungsversorgung (100) fließenden Strom und/oder einen zwischen der ersten Brückenschaltung (112) und der Primärseite des Transformators (120) fließenden Strom zu erfassen;
einen zweiten Spannungssensor, der eingerichtet ist, eine Spannung der zweiten Gleichstrom-Leistungsversorgung (101) zu erfassen; und
einen zweiten Stromsensor, der eingerichtet ist, einen durch die zweite Gleichstrom-Leistungsversorgung (101) fließenden Strom und/oder einen zwischen der zweiten Brückenschaltung (113) und der Sekundärseite des Transformators (120) fließenden Strom zu erfassen, wobei
die Steuereinheit (131) eingerichtet ist, eine Richtung der Gleichstromleistung auf der Grundlage von Spannungen, die jeweils durch den ersten Spannungssensor und den zweiten Spannungssensor erfasst werden, Strömen, die jeweils durch den ersten Stromsensor und den zweiten Stromsensor erfasst werden, und einem von außen eingegebenen Steuerbefehl zu steuern.

3. Bidirektionaler DC-DC-Wandler (1B, 1C) nach Anspruch 1, wobei
der erste Bypassschalter (116) und der zweite Bypassschalter (117) jeweils unter Verwendung eines Relais gebildet sind.

4. Bidirektionaler DC-DC-Wandler (1B, 1C) nach Anspruch 1, wobei
die erste Brückenschaltung (112) und die zweite Brückenschaltung (113) jeweils unter Verwendung einer Halbbrückenschaltung oder einer Vollbrückenschaltung gebildet sind.

5. Bidirektionaler DC-DC-Wandler (1B, 1C) nach Anspruch 1, wobei
die erste Resonanzschaltung (118) und die zweite Resonanzschaltung (119) auf einer ersten Leiterplatte (600) montiert sind,
der erste Bypassschalter (116) und der zweite Bypassschalter (117) auf einer zweiten Leiterplatte montiert sind, und
die erste Leiterplatte (600) und die zweite Leiterplatte parallel zueinander mit einem vorbestimmten Abstand angeordnet sind.

6. Bidirektionaler DC-DC-Wandler (1B, 1C) nach Anspruch 1, der eingerichtet ist,
nach dem Stoppen eines Betriebs der ersten Brückenschaltung (112) einen Betrieb der zweiten Brückenschaltung (113) zu starten, wenn die von der ersten Brückenschaltung (112) ausgegebene Leistung kleiner als ein vorbestimmter Wert wird, und
nach dem Stoppen des Betriebs der zweiten Brückenschaltung (113) einen Betrieb der ersten Brückenschaltung (112) zu starten, wenn die von der zweiten Brückenschaltung (113) ausgegebene Leistung kleiner als der vorbestimmte Wert wird.

## Revendications

1. Convertisseur CC-CC bidirectionnel (1C) qui est un convertisseur CC-CC capable de convertir une puissance CC bidirectionnellement entre une première alimentation de puissance CC (100) et une seconde alimentation de puissance CC (101), le convertisseur CC-CC bidirectionnel (1C) comprenant :
un transformateur (120) ;
un premier circuit en pont (112) pour convertir mutuellement une puissance CC et une puissance CA qui sont entrées et sorties entre la première alimentation de puissance CC (100) et un côté primaire du transformateur (120) ;
un second circuit en pont (113) pour convertir mutuellement une puissance CC et une puissance CA qui sont entrées et sorties entre la seconde alimentation de puissance CC (101) et un côté secondaire du transformateur (120) ;
un premier circuit résonant (118) pouvant être connecté entre le premier circuit en pont (112) et le côté primaire du transformateur (120) ;
un second circuit résonant (119) pouvant être connecté entre le second circuit en pont (113) et le côté secondaire du transformateur (120) ;
un premier interrupteur de dérivation (116) pour commuter un état de connexion du premier circuit résonant (118) entre le premier circuit en pont (112) et le côté primaire du transformateur (120) ;
un second interrupteur de dérivation (117) pour commuter un état de connexion du second circuit résonant (119) entre le second circuit en pont (113) et le côté secondaire du transformateur (120) ; et
une unité de commande (131) pour commander chacun du premier interrupteur de dérivation (116) et du second interrupteur de dérivation (117),
**caractérisé en ce que**
le premier circuit résonant (118) est configuré pour utiliser un flux de fuite du côté primaire du transformateur (120) et un premier condensateur (C1), et
le second circuit résonant (119) est configuré pour utiliser un flux de fuite du côté secondaire du transformateur (120) et un second condensateur (C2),
un premier trajet de dérivation (301) est prévu en parallèle du premier condensateur (C1), dans lequel
le premier condensateur (C1) et le premier trajet de dérivation (301) sont chacun connectés entre le premier circuit en pont (112) et le côté primaire du transformateur (120) par l'intermédiaire du premier interrupteur de dérivation (116), et
le premier interrupteur de dérivation (116) est configuré pour commuter une destination de connexion du côté primaire du transformateur (120) soit vers le premier condensateur (C1), soit vers le premier trajet de dérivation (301),
un second trajet de dérivation (302) est prévu en parallèle du second condensateur (C2), dans lequel
le second condensateur (C2) et le second trajet de dérivation (302) sont chacun connectés entre le second circuit en pont (113) et le côté secondaire du transformateur (120) par l'intermédiaire du second interrupteur de dérivation (117), et
le second interrupteur de dérivation (117) est configuré pour commuter une destination de connexion du côté secondaire du transformateur (120) soit vers le second condensateur (C2), soit vers le second trajet de dérivation (302),
l'unité de commande (131) est configurée pour commander,
dans un cas où l'unité de commande (131) convertit une puissance CC s'écoulant dans une direction allant de la première alimentation de puissance CC (100) vers la seconde alimentation de puissance CC (101), le premier interrupteur de dérivation (116) et le second interrupteur de dérivation (117) de sorte que la destination de connexion du côté primaire du transformateur (120) est commutée vers le premier condensateur (C1) et que la destination de connexion du côté secondaire du transformateur (120) est commutée vers le second trajet de dérivation (302), et
dans un cas où l'unité de commande (131) convertit une puissance CC s'écoulant dans une direction allant de la seconde alimentation de puissance CC (101) vers la première alimentation de puissance CC (100), le premier interrupteur de dérivation (116) et le second interrupteur de dérivation (117) de sorte que la destination de connexion du côté primaire du transformateur (120) est commutée vers le premier trajet de dérivation (301) et que la destination de connexion du côté secondaire du transformateur (120) est commutée vers le second condensateur (C2).

2. Convertisseur CC-CC bidirectionnel (1B, 1C) selon la revendication 1, comprenant :
un premier capteur de tension configuré pour détecter une tension de la première alimentation de puissance CC (100) ;
un premier capteur de courant configuré pour détecter un courant s'écoulant à travers la première alimentation de puissance CC (100) et/ou un courant s'écoulant entre le premier circuit en pont (112) et le côté primaire du transformateur (120) ;
un second capteur de tension configuré pour détecter une tension de la seconde alimentation de puissance CC (101) ; et
un second capteur de courant configuré pour détecter un courant s'écoulant à travers la seconde alimentation de puissance CC (101) et/ou un courant s'écoulant entre le second circuit en pont (113) et le côté secondaire du transformateur (120), dans lequel
l'unité de commande (131) est configurée pour commander une direction de la puissance CC sur la base de tensions détectées respectivement par le premier capteur de tension et le second capteur de tension, de courants détectés respectivement par le premier capteur de courant et le second capteur de courant, et d'une instruction de commande entrée depuis l'extérieur.

3. Convertisseur CC-CC bidirectionnel (1B, 1C) selon la revendication 1, dans lequel
le premier interrupteur de dérivation (116) et le second interrupteur de dérivation (117) sont chacun constitués au moyen d'un relais.

4. Convertisseur CC-CC bidirectionnel (1B, 1C) selon la revendication 1, dans lequel
le premier circuit en pont (112) et le second circuit en pont (113) sont chacun constitués au moyen d'un circuit en demi-pont ou d'un circuit en pont complet.

5. Convertisseur CC-CC bidirectionnel (1B, 1C) selon la revendication 1, dans lequel
le premier circuit résonant (118) et le second circuit résonant (119) sont montés sur une première carte de circuit (600),
le premier interrupteur de dérivation (116) et le second interrupteur de dérivation (117) sont montés sur une seconde carte de circuit, et
la première carte de circuit (600) et la seconde carte de circuit sont agencées parallèlement l'une à l'autre à un intervalle prédéterminé.

6. Convertisseur CC-CC bidirectionnel (1B, 1C) selon la revendication 1, configuré pour
après l'arrêt d'un fonctionnement du premier circuit en pont (112), démarrer un fonctionnement du second circuit en pont (113) lorsque la puissance de sortie du premier circuit en pont (112) devient inférieure à une valeur prédéterminée, et
après l'arrêt du fonctionnement du second circuit en pont (113), démarrer un fonctionnement du premier circuit en pont (112) lorsque la puissance de sortie du second circuit en pont (113) devient inférieure à la valeur prédéterminée.
